# EUROPÄISCHE PATENTANMELDUNG

(11) **EP 4 092 657 A1**
(43) Veröffentlichungstag der Anmeldung: **23.11.2022**
(21) Anmeldenummer: 21174866.0
(22) Anmeldetag: 20.05.2021
(51) Int. Cl.: G09F 3/03

(54) **PLOMBE**

(71) Anmelder: Service Impex Costa Dorada S.L., 43840 Salou Tarragona (ES)
(72) Erfinder: CERBARI, Alexandru, 43840 Salou Tarragona (ES)
(74) Vertreter: Jeck, Anton

(57) **Zusammenfassung**

Es wird eine Plombe (01) mit einem Plombenkörper (02) und einem Plombenband (03) beschrieben. Zumindest der Plombenkörper (02) besteht aus einem biologisch abbaubaren Werkstoff.

## Beschreibung

Die Erfindung betrifft eine Plombe gemäß dem Oberbegriff des Anspruchs 1.

Eine Plombe besteht aus einem Plombenkörper und einem Plombenband. Um auch extremen Witterungseinflüssen zu trotzen, besteht sie aus Verwitterungsresistentem Material. Heutzutage handelt es sich dabei typischerweise um Metall oder Kunststoff.

Beim Verplomben wird das Plombenband in einem Bogen durch zwei gegenüberliegende Öffnungen an sich beim Öffnen oder beim Betätigen voneinander entfernenden Elementen beispielsweise eines Verschlusses zu einer Bucht gelegt. Anschließend wird das Plombenband vermittels des Plombenkörpers zu einer Schlaufe festgelegt. Die Schlaufe ist dabei so bemessen, dass sie, um entfernt zu werden, beispielsweise um Zugang zu einem Behälterinhalt oder zu einem Gerät zu erlangen, oder um eine Einstellung zu verändern, irreversibel zerstört werden muss.

Wichtig ist an dieser Stelle hervorzuheben, dass der Begriff Schlaufe in diesem Dokument ein feststehendes Auge in Tau und/oder Bandwerk bezeichnet, das sich nicht löst und nicht zuzieht.

Weil eine Plombe nur durch Zerstörung entfernt werden kann, trägt sie im besten Fall zum Müllaufkommen bei oder erfährt im schlechtesten Fall spontanen Eintrag in die Umgebung. Beides ist dem Umweltschutz abträglich.

Eine Aufgabe der Erfindung ist es, eine Plombe zu schaffen, welche dem Schutz der Umwelt weniger abträglich ist.

Die Aufgabe wird durch die Merkmale des unabhängigen Anspruchs gelöst. Vorteilhafte Ausführungsformen sind in den Ansprüchen, den Zeichnungen sowie in der nachfolgenden Beschreibung, einschließlich der zu den Zeichnungen zugehörigen, wiedergegeben.

Die Erfindung betrifft demnach eine Plombe umfassend einen Plombenkörper und ein Plombenband. Zumindest der Plombenkörper besteht aus einem biologisch abbaubaren Werkstoff.

Besonders bevorzugt besteht der biologisch abbaubare Werkstoff zumindest teilweise aus eigen-kompostierbarem Material.

Indem zumindest für den Plombenkörper ein biologisch abbaubarer Werkstoff verwendet wird, wird die Umweltbilanz der Plombe im Vergleich zum Stand der Technik erheblich verbessert. Wird die Plombe spontan in die Umgebung eingetragen, kompostiert sie im laufe der Zeit von selbst. Wird sie ordnungsgemäß entsorgt, beispielsweise in den Haus- oder Gewerbemüll, sorgt ihre selbständige Kompostierfähigkeit für eine Verringerung des Gesamtmüllaufkommens.

Zusätzliche, über die vollständige Lösung der gestellten Aufgabe und/oder über die voran genannten Vorteile hinausgehende Vorteile gegenüber dem Stand der Technik sind nachfolgend aufgeführt.

Die Erfindung wird nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:
- Fig. 1: eine Plombe in einem Ausgangszustand in einer Draufsicht auf deren erste Flachseite.
- Fig. 2: die Plombe aus Fig. 1 in dem Ausgangszustand in einer Draufsicht auf deren ihrer ersten Flachseite gegenüberliegende Flachseite.
- Fig. 3: die Plombe aus Fig. 1 in dem Ausgangszustand in einer Seitenansicht deren Längsseite.
- Fig. 4: die Plombe aus Fig. 1 in dem Ausgangszustand in einer Seitenansicht deren Schmalseite.
- Fig. 5: die Plombe aus Fig. 1 in dem Ausgangszustand in einer perspektivischen Ansicht.
- Fig. 6: die aus dem Ausgangszustand in einen Zwischenzustand überführte Plombe aus Fig. 1 in einer Draufsicht auf deren erste Flachseite.
- Fig. 7: die Plombe aus Fig. 6 in dem Zwischenzustand in einer Draufsicht auf deren ihrer ersten Flachseite gegenüberliegende Flachseite.
- Fig. 8: die Plombe aus Fig. 6 in dem Zwischenzustand in einer Seitenansicht deren Längsseite.
- Fig. 9: die Plombe aus Fig. 6 in dem Zwischenzustand in einer perspektivischen Ansicht.
- Fig. 10: die aus dem Zwischenzustand in einen Betriebszustand überführte Plombe aus Fig. 6 in einer Draufsicht auf deren erste Flachseite.
- Fig. 11: die Plombe aus Fig. 10 in dem Betriebszustand in einer Seitenansicht deren Längsseite.
- Fig. 12: die Plombe aus Fig. 10 in dem Betriebszustand in einer Seitenansicht deren Schmalseite.
- Fig. 13: die Plombe aus Fig. 10 in dem Betriebszustand in einer perspektivischen Ansicht.

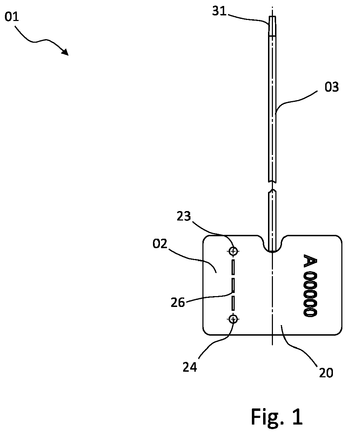

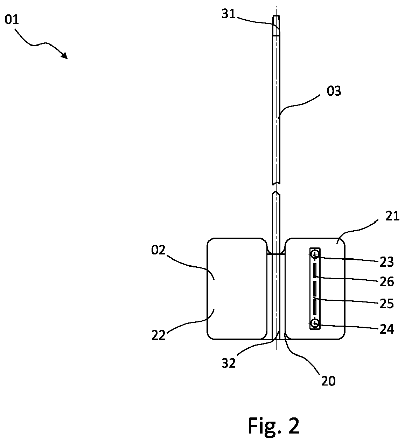

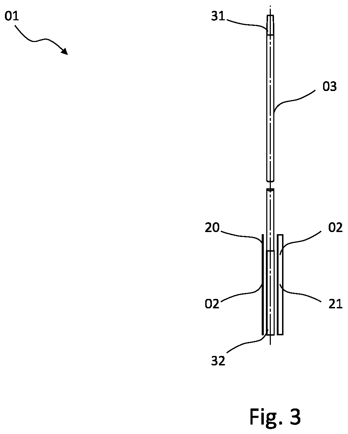

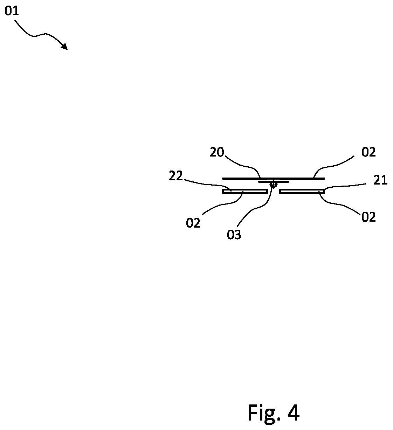

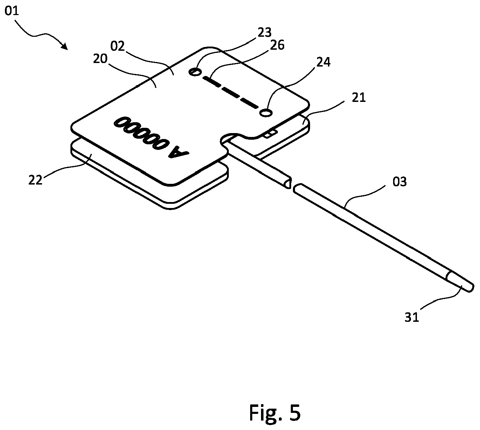

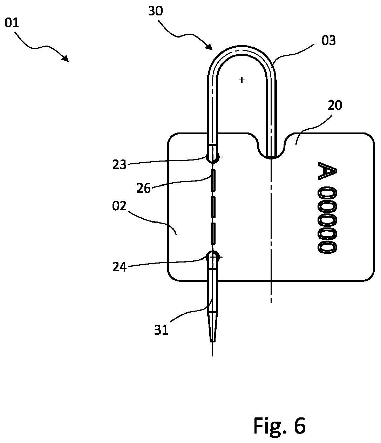

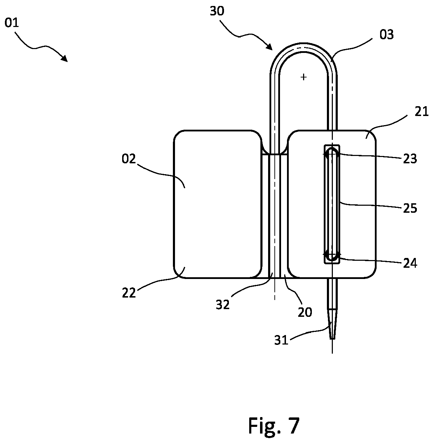

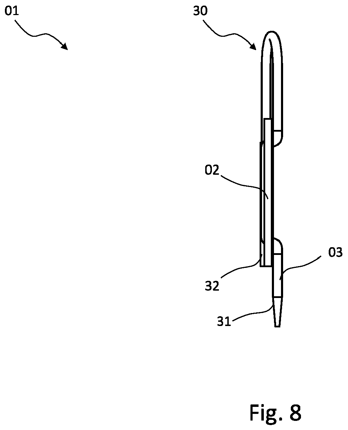

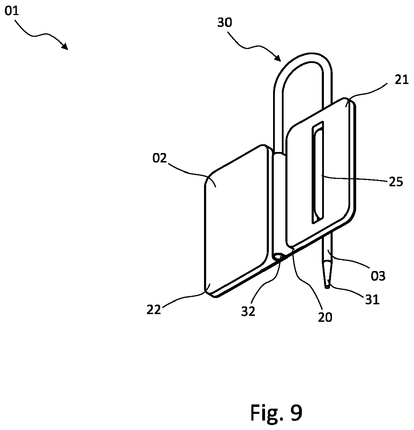

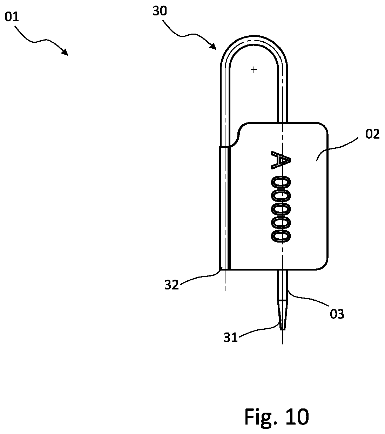

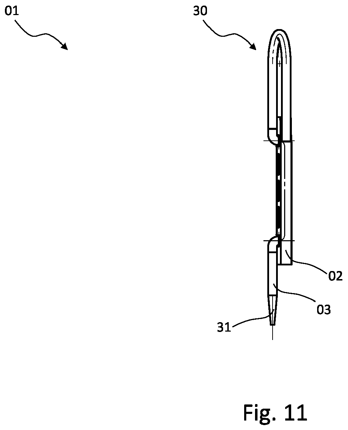

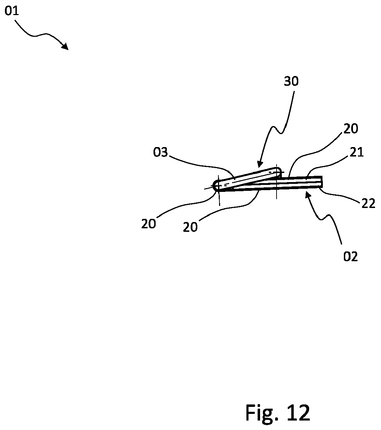

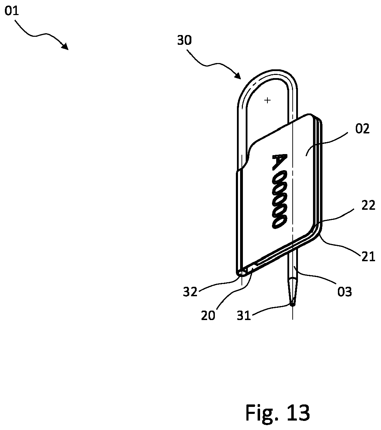

Eine in Fig. 1, Fig. 2, Fig. 3, Fig. 4, Fig. 5, Fig. 6, Fig. 7, Fig. 8, Fig. 9, Fig. 10, Fig. 11, Fig. 12, Fig. 13 ganz oder in Teilen dargestellte Plombe 01 umfasst:
- einen Plombenkörper 02, und
- ein ausgehend von einem Ausgangszustand (Fig. 1, Fig. 2, Fig. 3, Fig. 4, Fig. 5) zur Überführung in einen Zwischenzustand (Fig. 6, Fig. 7, Fig. 8, Fig. 9) an dem Plombenkörper 02 zu einer Schlaufe 30 legbares und zum Erhalt eines Betriebszustands (Fig. 10, Fig. 11, Fig. 12, Fig. 13) mit dem Plombenkörper 02 betriebsgemäß verbindbares Plombenband 03.

Zumindest der Plombenkörper 02 aus einem biologisch abbaubaren Werkstoff besteht.

Bevorzugt besteht hiernach zumindest der Plombenkörper 02, vorzugsweise sämtliche Funktionsteile der Plombe 01, und besonders bevorzugt die gesamte Plombe 01 aus einem oder mehreren biologisch abbaubaren Werkstoffen.

Mit anderen Worten umfasst die auch als Siegel bezeichenbare Plombe 01 das Plombenband 03 als ein flexibles Mittel und/oder einen solchen Streifen, wie etwa ein Seil und/oder eine Kette mit zwei Endpartien 31, 32, die mit dem Plombenkörper 02 betriebsgemäß verbindbar sind. Die Plombe 01 zeichnet sich dadurch aus, dass beispielsweise zumindest die Funktionsteile der Plombe 01 aus biologisch abbaubarem Werkstoff bestehen.

Biologisch abbaubare Werkstoffe, kurz BAW, müssen innerhalb von 6-10 Wochen in einer Großkompostierung abgebaut werden. Die Prüfung von BAWs erfolgt durch die DIN-Norm EN 13432. Sie müssen nicht unbedingt aus biologischen Rohstoffen bestehen. Beispiele dafür sind so genannte Stärke-Blends, beispielsweise auf Maisbasis, oder bestimmte Polyester.

Bei dem biologisch abbaubaren Werkstoff kann es sich um einen biologisch abbaubaren Kunststoff, bevorzugt um einen biologisch abbaubaren und biobasierten Kunststoff handeln.

Bevorzugt handelt es sich jedoch um einen in der Natur vorkommenden, kompostierbaren Werkstoff.

Besonders bevorzugt besteht der biologisch abbaubare Werkstoff zumindest teilweise aus eigen-kompostierbarem Material.

Die Möglichkeit zur Eigen-Kompostierung stellt sicher, dass auch solche Plomben 01, die im Zuge ihrer Entsorgung einer nicht-industriellen Verwertung zugeführt werden, geringstmöglichen schädlichen Einfluss auf die Umwelt ausüben.

Die auch als Rotte oder Verrottung bekannte Kompostierung bezeichnet den Teil des Nährstoffkreislaufs, bei dem organisches Material unter Einfluss von Luftsauerstoff von Bodenlebewesen abgebaut wird. Neben Kohlendioxid werden dabei auch wasserlösliche Mineralstoffe freigesetzt, die als Dünger wirken. Ein Teil der bei diesem Abbau entstehenden Zwischenprodukte wird zu Humus umgewandelt.

Bei dem biologisch abbaubaren Werkstoff kann es sich beispielsweise um:
- einen biologisch abbaubaren Kunststoff, und/oder
- einen biologisch abbaubaren und biobasierten Kunststoff, und/oder
- ein festes Material der Polymilchsäure, und/oder
- Cellulose, und/oder
- Celluloseester, und/oder
- Celluloid, und/oder
handelt, der biologisch abbaubare Werkstoff hierauf basiert, oder der biologisch abbaubare Werkstoff dies umfasst.

Vorteilhaft kann der nachfolgend kurz auch als Basis bezeichnete Plombenkörper 02 bei allen beschriebenen Ausgestaltungen vollständig oder teilweise aus einem wasserdichten Material auf Cellulosebasis hergestellt sein.

Alternativ oder zusätzlich kann die Basis oder Teile von ihr aus wasserfestem Papier oder Pappe hergestellt sein.

Bei dem Plombenband 03 kann es sich um ein flexibles oder biegeelastisches Band handeln. Alternativ ist denkbar, dass es sich bei dem Plombenband 03 um ein biegeschlaffes Band handelt.

Als Plombenband 03 beispielsweise in Form eines flexiblen, zu einer Schlaufe festlegbaren Elements, kann ein Faden oder eine Schnur oder ein Band aus pflanzlichen Rohstoffen vorgesehen sein.

Wichtig ist an dieser Stelle hervorzuheben, dass das Plombenband 03 alternativ oder zusätzlich aus natürlichem, biobasierten biologisch abbaubarem Polymer bestehen kann.

Grundsätzlich können der Plombenkörper und das Plombenband aus dem selben biologisch abbaubare Werkstoff hergestellt sein. Auch ein eventuell zur nachfolgend noch beschriebenen Herstellung einer Verplombung vorgesehener Klebestreifen kann einen biobasierten biologisch abbaubaren Kunststoff umfassen.

Ebenso wichtig ist hervorzuheben, dass der Begriff Plombenband 03 ein strangförmiges Element mit einer größten Erstreckung entlang des Strangs und mit beliebiger Geometrie seines Querschnitts quer zur Erstreckung des Strangs umfasst. Der Begriff Band beschränkt in diesem Zusammenhang den Querschnitt weder auf eine flache Geometrie, bei Vorliegen einer solchen das Band am ehesten als ein Streifen beschreibbar wäre, noch auf eine kreisrunde Geometrie, bei Vorliegen einer solchen das Band am ehesten als ein Seil oder eine Schnur oder ein Draht beschreibbar wäre. Es sind für die vorliegende Plombe 01 sowohl die genannten, als auch hierzwischen liegende Geometrien des Querschnitts des strangförmigen Elements verwendbar. Das Plombenband 03 kann biegeschlaff, biegeelastisch, biegeweich oder biegesteif ausgeführt sein, ohne Einschränkung der grundsätzlichen Verwendbarkeit der Plombe 01.

Um im Zeichen steigenden Umweltbewusstseins und Umweltschutzes dem schädlichen spontanen Eintrag von Kunststoffen und Metallen, wie sie heutzutage zum Verplomben gang und gäbe sind, in die Umgebung Einhalt zu gebieten wird mit der Plombe 01 das Ziel erreicht, eine sowohl durch einen spontanen Eintrag einer nicht mehr benötigten Plombe 01 in die Umgebung - dem grundsätzlich kein Einhalt geboten werden kann - als auch durch eine ordnungsgemäße Entsorgung einer nicht mehr benötigten Plombe entstehende, schädliche Beeinträchtigung der Umgebung so gering wie möglich zu gestalten.

Der Plombenkörper 02 ist vorteilhaft zumindest mit zwei beispielsweise wenigstens um den Umfang der Schlaufe 30 voneinander beabstandeten Partien des Plombenbands 03, beispielsweise den Endpartien 31, 32 des Plombenbands 03, lösbar verbindbar und in einem in Fig. 10, Fig. 11, Fig. 12, Fig. 13 dargestellten Betriebszustand unlösbar versiegelbar.

Eine vorteilhafte Ausgestaltung der Plombe 01 sieht vor, dass der Plombenkörper 02 aus zwei zumindest miteinander in einem Betriebszustand unlösbar versiegelbar verbindbaren Teilen 21, 22 besteht.

Besonders bevorzugt besteht der Plombenkörper 02 aus zwei gelenkig miteinander verbindbaren Teilen 21, 22.

Die zwei miteinander in einem in Fig. 10, Fig. 11, Fig. 12, Fig. 13 dargestellten Betriebszustand unlösbar versiegelbar verbindbaren Teile 21, 22 können miteinander verklebbar sein.

Dies dient einer Herstellung einer Verplombung anhand der Plombe 01, indem diese aus ihrem in Fig. 1, Fig. 2, Fig. 3, Fig. 4, Fig. 5 dargestellten Ausgangszustand, bei dem zunächst nur eine Endpartie 32 an dem Plombenkörper 02 festgelegt ist, in ihren in Fig. 6, Fig. 7, Fig. 8, Fig. 9 dargestellten Zwischenzustand überführt wird. Hierzu wird die andere Endpartie 31 beispielsweise durch zwei gegenüberliegende Öffnungen an sich beim Öffnen voneinander entfernenden Elementen beispielsweise eines Verschlusses eines zu verplombenden Behälters oder Geräts hindurchgeführt und zu einer Bucht gelegt. Anschließend wird das Plombenband 03 vermittels des Plombenkörpers 02 zu einer Schlaufe 30 festgelegt, um einen in Fig. 10, Fig. 11, Fig. 12, Fig. 13 dargestellten Betriebszustand der Plombe 01, der deren Zustand nach Herstellung der Verplombung entspricht, zu erhalten.

Zum Festlegen kann eine Klebeschicht zwischen den miteinander in einem in Fig. 10, Fig. 11, Fig. 12, Fig. 13 dargestellten Betriebszustand unlösbar versiegelbar verbundenen Teilen angeordnet sein. Die Schlaufe 30 ist dabei so bemessen, dass sie, um entfernt zu werden, beispielsweise um Zugang zu einem Behälterinhalt oder zu einem Gerät zu erlangen, oder um eine Einstellung zu verändern, irreversibel zerstört werden muss.

Vorteilhaft ist die eine Partie, beispielsweise die eine Endpartie 32 , zwischen den beiden Teilen 21, 22 des Plombenkörpers 02 angeordnet, während die andere Partie, beispielsweise die andere Endpartie 31, ein erstes Teil 21 der beiden Teile 21, 22 des Plombenkörpers 02 durchquert und mit diesem fest verbindbar ist.

Das erste Teil 21 kann hierzu mindestens zwei durchgehende Öffnungen 23, 24 mit einer dazwischenliegenden Nut 25 aufweisen, die an die Abmessungen des als flexibles Mittel und/oder flexiblen Streifen, wie etwa ein Seil und/oder eine Kette mit zwei Endpartien verwendeten Plombenbands 03, vorzugsweise an die Querschnittsabmessungen des Plombenbands 03 und/oder an die Biegesteifigkeit des Plombenbands 03 angepasst sind.

Vorteilhaft ragt im in Fig. 10, Fig. 11, Fig. 12, Fig. 13 dargestellten Betriebszustand der als ein Siegel verwendbaren Plombe 01 zumindest die andere Endpartie 31 aus dem Plombenkörper 02 heraus.

Der Plombenkörper 02 kann gemäß der voranstehend beschriebenen bevorzugten Ausgestaltung mit gelenkig miteinander verbundenen Teilen 21, 22 in Form zweier entlang eines als Buchrücken dienenden Biegestreifens 23 miteinander gelenkig verbundener Buchdeckel ausgestaltet sein. Eine erste Partie, beispielsweise eine erste Endpartie 32 des Plombenbands 03 kann in einem ersten Buchdeckel, oder am Biegestreifen 20 zwischen den beiden Teilen 21, 22 festgelegt sein. In dem im Beispiel als erster Buchdeckel bezeichneten ersten Teil 21 sind zusätzlich vermittels der Nut 25 in Form eines Durchführungskanals ineinander übergehende Öffnungen 23, 24 in Form von Durchführungsöffnungen für die verbleibende Partie, insbesondere für die verbleibende freie andere Endpartie 31 des Plombenbands 03 vorgesehen. Gegenüberliegend des Durchführungskanals können in dem verbleibenden Buchdeckel vorteilhaft in aufeinandergeklapptem Zustand der beiden Buchdeckel in den Durchführungskanal hineinragende Keile angeordnet sein, welche beim Zusammenklappen der Buchdeckel ein Labyrinth in dem Durchführungskanal bilden, welches in zusammengeklapptem und miteinander beispielsweise verklebtem Betriebszustand der beiden Teile 21, 22 die verbleibende Partie, beispielsweise die verbleibende freie andere Endpartie 31 des Plombenbands 03 unverrückbar im Durchführungskanal festlegt.

Hierdurch kann ein ökologisches Indikativsiegel in Form einer Plombe 01 aus biologisch abbaubaren Materialien geschaffen werden, welches als Plombenband 03 ein flexibles, zu einer Schlaufe 30 festlegbares Element, als Plombenkörper 02 eine Basis in Form von einem spiegelsymmetrischen Blatt mit einer Innen- und Außenfläche, mit der Möglichkeit, die Basis nach innen zu biegen und bestehend aus dem ersten und dem zweiten Teil 21, 22, die entlang die Symmetrielinie durch einen Biegestreifen 20 getrennt sind, an dessen Innenfläche eine Endparte 32 des flexiblen Elements befestigt ist, umfasst. Im ersten Teil 21 der Basis sind zwei kurz auch als Löcher bezeichnete Öffnungen 23, 24 zum Durchziehen einer freien verbleibenden anderen Endpartie 31 des flexiblen Elements bei der Überführung der Plombe 01 aus deren Anfangszustand (Fig. 1, Fig. 2, Fig. 3, Fig. 4, Fig. 5) in deren Zwischenzustand (Fig. 6, Fig. 7, Fig. 8, Fig. 9) zum Zwecke des Erhalts eines Betriebszustands (Fig. 10, Fig. 11, Fig. 12, Fig. 13) zur Herstellung einer Verplombung oder Plombierung ausgeführt, wobei auf der Innenfläche des ersten Teils 21 der Basis als erstes Teil 21 eine Platte mit einer Dicke angebracht ist, die die Dicke des flexiblen umfassenden Elements nicht überschreitet, und in der eine Nut 25 ausgeführt ist, die die Löcher zum Durchziehen einer freien verbleibenden anderen Endpartie 31 des flexiblen umfassenden Elements bei der Plombierung umfasst. Auf der Innenfläche des zweiten Teils 22 der Basis ist eine Klebstoffschicht mit Restklebrigkeit aufgetragen, die mit einer schützenden Abreißschicht bedeckt ist. Die Außenfläche von mindestens einem der Teile 21, 22, der Basis ist mit der Möglichkeit ausgeführt, darauf eine Identifikations- oder eine andere Art von Information, ein biologisch abbaubares Schützetikett oder ein RFID-Etikett aufzutragen.

In der Basis, beispielsweise im ersten Teil 21, können zwischen den Löchern Perforationen 26 ausgeführt sein.

Wichtig ist hervorzuheben, dass für jede Endpartie 31, 32 des Plombenbands 03 eine Öffnung 23, 24 mit einer bis zu einem gegenüberliegenden Rand führenden Nut 25 vorgesehen sein kann. Hierdurch werden beide Endpartien 31, 32 des Plombenbands 03 zum Verplomben durch jeweils eine eigene Öffnung 23, 24 in jeweils eine eigene Nut 25 eingelegt und beim Zusammenklappen der beiden Teile 21, 22 des Plombenkörpers 02 in der jeweiligen eigenen Nut 25 festgelegt.

Hierdurch wird ein ökologisches Indikativsiegel in Form einer Plombe 01 aus biologisch abbaubaren Materialien geschaffen, welches als Plombenband 03 ein flexibles, zu einer Schlaufe 30 festlegbares Element umfasst, und welches als Plombenkörper 02 eine Basis in Form von einem spiegelsymmetrischen Blatt mit einer Innen- und Außenfläche umfasst, mit der Möglichkeit, die Basis nach innen zu biegen, und bestehend aus dem ersten Teil 21 und dem zweiten Teil 22, die entlang die Symmetrielinie durch einen Biegestreifen 20 getrennt sind, an dessen Innenfläche eine Endpartie 32 des flexiblen umfassenden Elements befestigt ist. Eine Platte ist als erstes Teil 21 der Basis auf der Innenfläche befestigt. In der Platte sind zwei Durchgangslöcher zum Durchziehen einer verbleibenden freien anderen Endpartie 31 des flexiblen, zu einer Schlaufe festlegbaren Elements bei der Plombierung ausgeführt sind. Zwischen den die Öffnungen 23, 24 bildenden Löchern ist eine Ausnehmung bevorzugt in Gestalt einer in eines der beiden Teile 21, 22 eingelassenen Nut 25 ausgeführt, um bei der Plombierung das zu einer Schlaufe 30 festlegbare Element aufzunehmen. Auch für jedes Loch ist je eine Durchgangsnut 25 ausgeführt, welche vom Loch bis zum nächsten Rand der Basis führt. Auf der Innenfläche des zweiten Teils 22 der Basis ist eine Klebstoffschicht mit Restklebrigkeit aufgetragen, die mit einer schützenden Abreißschicht bedeckt ist. Die Außenfläche mindestens von einem der Teile 21, 22 der Basis ist mit der Möglichkeit ausgeführt, darauf eine Identifikations- oder eine andere Art von Information, ein biologisch abbaubares Schützetikett oder ein RFID-Etikett aufzutragen.

Vorteilhaft kann zumindest auf der Außenfläche eines der Teile 21, 22 des auch als Basis bezeichneten Plombenkörpers 02 ein Temperaturindikator aufgetragen sein.

Die Plombe 01 kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der voranstehenden Beschreibung zu den in den Zeichnungen dargestellten Ausführungsbeispielen beschriebene Merkmale aufweisen.

Die Plombe 01 kann etwa zur Versiegelung von Behältnissen oder Geräten, beispielsweise an deren Gehäuse, beispielsweise im internationalen Waren- und Güterverkehr als Zollsiegel allgemein bekannte Verwendung finden.

Beispielsweise kann durch das als Verplomben bezeichnete Anbringen der Plombe 01 am Verschluss eines Behälters oder Geräts festgestellt werden, ob ein Behälter oder ein Gerät nach dem Verplomben beispielsweise unbefugt geöffnet wurde. Ebenso verhält es sich bei andersartigen Verwendungen der Plombe 01, beispielsweise als Nachweis, dass eine vorgenommene Einstellung an einem Gerät nicht verändert wurde, als Eintrittskartenersatz, zur Unbrauchbarmachung technischer Anschlüsse frei von deren Deaktivierung, sowie bei militärischen Einrichtungen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Zollsiegeln und dergleichen gewerblich anwendbar.

Die Erfindung ist darüber hinaus im Bereich der Herstellung und dem Betrieb von Anlagen und Vorrichtungen gewerblich anwendbar, bei denen eine unbefugt vorgenommene Änderung einer Einstellung oder ein unbefugter Zugang anhand des Bruchs eines Siegels nachträglich feststellbar sein muss.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Plombe
- 02: Plombenkörper
- 03: Plombenband

- 20: Biegestreifen
- 21: Teil
- 22: Teil
- 23: Öffnung
- 24: Öffnung
- 25: Nut
- 26: Perforation

- 30: Schlaufe
- 31: Endpartie
- 32: Endpartie

## Patentansprüche

1. Plombe (01) mit einem Plombenkörper (02) und einem Plombenband (03), wobei zumindest der Plombenkörper (02) aus einem biologisch abbaubaren Werkstoff besteht.

2. Plombe nach Anspruch 1, wobei der biologisch abbaubare Werkstoff zumindest teilweise aus eigen-kompostierbarem Material besteht.

3. Plombe nach Anspruch 1 oder 2, wobei der biologisch abbaubare Werkstoff:
- einen biologisch abbaubaren Kunststoff, und/oder
- einen biologisch abbaubaren und biobasierten Kunststoff, und/oder
- eine Polymilchsäure, und/oder
- Cellulose, und/oder
- Celluloseester, und/oder
- Celluloid
umfasst, der biologisch abbaubare Werkstoff hierauf basiert, oder es sich bei dem biologisch abbaubaren Werkstoff hierum handelt.

4. Plombe nach Anspruch 1, 2 oder 3, wobei der Plombenkörper (02) zumindest mit zwei voneinander beabstandeten Partien (31, 32) des Plombenbands (03) lösbar verbindbar und in einem Betriebszustand unlösbar versiegelbar ist.

5. Plombe nach einem der Ansprüche 1 bis 4, wobei der Plombenkörper (02) aus zwei zumindest miteinander in einem Betriebszustand unlösbar versiegelbar verbindbaren Teilen (21, 22) besteht.

6. Plombe nach einem der voranstehenden Ansprüche, wobei der Plombenkörper (02) aus zwei gelenkig miteinander verbindbaren Teilen (21, 22) besteht.

7. Plombe nach Anspruch 5 oder 6, wobei die zwei miteinander in einem Betriebszustand unlösbar versiegelbar verbindbaren Teile (21, 22) miteinander verklebbar sind.

8. Plombe nach Anspruch 7, wobei eine Klebeschicht zwischen den miteinander in einem Betriebszustand unlösbar versiegelbar verbundenen Teilen (21, 22) angeordnet ist.

9. Plombe nach einem der voranstehenden Ansprüche, wobei die eine Partie (32) zwischen den beiden Teilen (21, 22) des Plombenkörpers (02) angeordnet ist, während die andere Partie (31) ein erstes Teil (21) der beiden Teile (21, 22) durchquert und mit diesem fest verbindbar ist.

10. Plombe nach einem der voranstehenden Ansprüche, wobei ein erstes Teil (21) der beiden Teile (21, 22) des Plombenkörpers (02) mindestens zwei durchgehende Öffnungen (23, 24) mit einer dazwischenliegenden Nut (25) aufweist, die an die Abmessungen des Plombenbands (03) angepasst sind, und dass im Betriebszustand der Plombe (01) zumindest die andere Endpartie (31) aus dem Plombenkörper (02) herausragt.
